**Europäisches Patentamt**

**European Patent Office**

**Office européen des brevets**

(19)

(11) Veröffentlichungsnummer: **0 187 993**
**B1**

(12) # EUROPÄISCHE PATENTSCHRIFT

(45) Veröffentlichungstag der Patentschrift:
26.07.89

(21) Anmeldenummer: 85116382.4

(22) Anmeldetag: 20.12.85

(51) Int. Cl.⁴: **B 22 D 35/00,** B 22 D 39/00,
B 22 D 11/16, B 22 D 27/02,
G 01 F 1/56

(54) Vorrichtung zur Regelung einer Giess- bzw. Fördereinrichtung beim Füllen einer Gussform mit Flüssigmetal.

(30) Priorität: 14.01.85 DE 3500978

(43) Veröffentlichungstag der Anmeldung:
23.07.86 Patentblatt 86/30

(45) Bekanntmachung des Hinweises auf die Patenterteilung:
26.07.89 Patentblatt 89/30

(84) Benannte Vertragsstaaten:
AT BE CH DE FR GB IT LI LU NL SE

(56) Entgegenhaltungen:
CH-A- 609 595
DE-A- 2 101 729
DE-C- 2 839 953
DE-C- 3 245 832

(73) Patentinhaber: INTERATOM Gesellschaft mit
beschränkter Haftung, Friedrich-Ebert-Strasse,
D-5060 Bergisch-Gladbach 1 (DE)

(72) Erfinder: Leich, Wilfried, Grüngürtelstrasse 12,
D-5000 Köln 50 (DE)
Erfinder: Biging, Arno, Im Fronhof 24, D-5060 Bergisch
Gladbach 1 (DE)
Erfinder: Barzantny, Joachim, Im Wiesengrund 42,
D-5067 Kürten-Eichhof (DE)

(74) Vertreter: Mehl, Ernst, Dipl.-Ing. et al, Postfach 22 13 17,
D-8000 München 22 (DE)

# Beschreibung

Die vorliegende Erfindung betrifft eine Vorrichtung nach dem Oberbegriff des 1. Anspruchs mit zugehöriger Gussform. Beim Füllen einer Gussform sind verschiedene Randbedingungen einzuhalten. Einerseits muss immer genügend Flüssigmetall zugeführt werden, damit keine Blasen in dem Gussstück entstehen können, andererseits soll ein Überfliessen von Flüssigmetall ebenfalls vermieden werden. Ausserdem soll der am Ende des Giessvorganges in der Einfüllöffnung stehende «Propfen» nicht zu gross sein, da dieses überschüssige Material zusätzlich erschmolzen werden muss, was die Energiekosten erhöht.

In der DE-C1-32 45 832, auf welcher der Oberbegriff des Anspruches 1 basiert, ist bereits ein Verfahren und eine Vorrichtung zur Überwachung des Endfüllstandes beim Füllen von Gussformen mit flüssigem Metall beschrieben. Dort wird ein Messaufsatz mit zwei Induktionsspulen, deren gegenseitige Induktion gemessen wird, auf die Gussform aufgesetzt, wobei beim Überschreiten eines Schwellwertes der gegenseitigen Induktion der Spulen die Zufuhr von Flüssigmetall beendet wird. Die dort beschriebene Vorrichtung hat den Vorteil, dass eine Nachrüstung mit dieser Vorrichtung ohne Veränderung an den Gussformen selbst möglich ist. Sie hat jedoch den Nachteil, dass das Innere des Messaufsatzes mit Flüssigmetall in Berührung kommt, wodurch seine Lebensdauer begrenzt ist. Ausserdem ist eine präzise Regelung der Flüssigmetallzufuhr mit diesem Aufsatz nur schwer möglich, da der Flüssigmetallspiegel während des Füllvorganges und bei der Endabschaltung unterhalb oder jedenfalls nur im unteren Bereich des Spulensystems liegt, während die grösste Messgenauigkeit bei einem Flüssigmetallspiegel in der Mitte des Spulensystems liegt. Die bekannte Vorrichtung eignet sich daher zwar gut für eine Endabschaltung, jedoch nicht ohne weiteres für eine präzise Regelung des Füllvorganges.

Aufgabe der vorliegenden Erfindung ist die Schaffung einer möglichst einfachen und wartungsarmen Vorrichtung zur präzisen Regelung einer Giess- bzw. Fördereinrichtung zum Füllen einer Gussform mit Flüssigmetall. Dabei ist zu berücksichtigen, dass selbst gleichartige Gussformen ein unterschiedliches Schluckvermögen haben können, d.h. das zugeführte Flüssigmetall fliesst unterschiedlich schnell in die betreffenden Formen. Fernerhin soll die Aufgabe gelöst werden, dass nacheinander ganz verschiedene Gussformen mit Flüssigmetall gefüllt werden können, ohne dass jeweils die Giess- bzw. Fördereinrichtung umgestellt oder beispielsweise neu programmiert werden muss. Ausserdem soll die vorgeschlagene Regelung insbesondere für elektromagnetische Fördereinrichtungen geeignet sein.

Zur Lösung dieser Aufgabe wird eine Vorrichtung nach dem Anspruch 1 vorgeschlagen. Die Vorrichtung besteht aus einem Aufsatz mit mindestens zwei Induktionsspulen, von denen mindestens eine als Sende- und eine als Empfangsspule ausgebildet sind, und einer Elektronik, welche die gegenseitige Induktion der Spulen misst und dementsprechend die Zufuhr von Flüssigmetall regelt. Der Aufsatz ist so geformt, dass er um den Kragen einer erfindungsgemässen Gussform gelegt werden kann. Ein solcher Aufsatz mit Spulen ist ein unempfindliches, für den Giessereibetrieb geeignetes Messgerät; denn die Induktionsspulen müssen nicht mehr mit einer Verkleidung versehen sein, die mit dem Flüssigmetall in Kontakt kommt. Dadurch sind sie praktisch wartungsfrei. Durch die Art der Regelung des Füllvorganges ist keinerlei vorherige Einstellung an der Giess- bzw. Fördereinrichtung nötig. Die beschriebene Regelung der Höhe des Flüssigmetallspiegels ermöglicht ein sicheres und fehlerfreies Füllen jeder Gussform, unabhängig von ihrem Schluckvermögen und ihrem Volumen. Überschreitet der Flüssigmetallspiegel einen vorgegebenen Grenzwert, so wird der Füllvorgang automatisch beendet. Weitere Parameter, beispielsweise die Temperatur der Schmelze und die Dauer des Giessvorganges, brauchen nicht mehr berücksichtigt zu werden.

In spezieller Ausgestaltung der Erfindung wird im Anspruch 2 vorgeschlagen, dass der Aufsatz zwei übereinanderliegende Zylinderspulen mit etwa rechteckigem Querschnitt aus hochtemperaturbeständigen Wicklungen aufweist, wobei die Spulen in Keramikmasse oder dergleichen eingebettet sein können. Prinzipiell sind verschiedene Anordnungen der Spulen denkbar, je nach den äusseren Begebenheiten. Besonders einfach ist jedoch der vorgeschlagene Aufbau zweier übereinanderliegender Zylinderspulen, da diese sich problemlos herstellen lassen.

Wie in Anspruch 3 beschrieben, können die Zuleitungen zu den Induktionsspulen vorteilhaft im Inneren von Halterungen, beispielsweise Stahlrohren, verlegt sein, wodurch zusätzlich ein Schutz vor Flüssigmetallspritzern erreicht wird.

Im Anspruch 4 wird die in der Vorrichtung verwendete Gussform beschrieben. Diese Gussform weist einen um die Eingussöffnung umlaufenden Kragen auf, um den ein Aufsatz mit Induktionsspulen gelegt werden kann. Dieser Kragen ist während des Füllvorganges und an dessen Ende zumindest teilweise mit Flüssigmetall gefüllt, weshalb er eine genügende Dicke aufweisen muss. Andererseits muss das die Induktionsspulen umgebende Magnetfeld zumindest teilweise den Kragen durchdringen können, weshalb er nicht zu dick sein darf. Nach Möglichkeit sollten Gussform und Kragen aus einem unmagnetischen und elektrisch nicht leitenden Material bestehen, was zum Beispiel bei Sandgussformen der Fall ist, damit die Magnetfelder im wesentlichen nur durch das eingefüllte Flüssigmetall beeinflusst werden. Im Prinzip ist jedoch die Messung auch bei nicht zu dicken, elektrisch leitenden Kragen oder bei elektrisch leitenden Gussformen denkbar. Da das Spulensystem selbst durch den Kragen geschützt ist, ist es nach Beendigung des Füllvorganges leicht abnehmbar und praktisch wartungsfrei. Natürlich müssen die Spulen aus für hohe Temperaturen geeigneten isolierten Leitern gewickelt werden.

Im Anspruch 4 wird vorgeschlagen, dass der Kragen ungefähr gleich hoch ist wie der Aufsatz mit den Induktionsspulen, mindestens jedoch halb so hoch. Die gegenseitige Induktion von zwei übereinander angeordneten Induktionsspulen ändert sich am stärksten, wenn sich der Flüssigmetallspiegel im Bereich der Mitte des Spulensystems verändert. Dort ist daher der günstigste Mess- und Regelbereich. Dementsprechend sollte der Kragen, sofern dies sich mit den übrigen Randbedingungen vereinbaren lässt, mindestens bis zur Mitte des Spulenaufsatzes reichen. In Spezialfällen sind jedoch Abweichungen von dieser Richtlinie möglich, wobei beispielsweise auch die Induktionsspulen unterschiedlich hoch sein können. Da das Spulensystem im allgemeinen aus zwei Induktionsspulen, nämlich einer Sende- und einer Empfangsspule besteht, ergeben sich noch verschiedene Variationsmöglichkeiten beim Aufbau des Spulensatzes. So muss zwar die Sendespule aus einem Leiter mit genügend grossem Querschnitt bestehen, um genügend Leistung einkoppeln zu können, jedoch kann die Empfangsspule aus einem Leiter mit geringerem Querschnitt gewickelt werden, wodurch deren Bauhöhe geringer sein kann als die der Sendespule.

In weiterer Ausgestaltung der Erfindung wird im Anspruch 5 vorgeschlagen, dass der Kragen aus dem gleichen Material wie die Gussform besteht und an diese angeformt ist. Ein solcher Kragen kann bei der Herstellung der Gussform gleich mitgeformt werden, ohne dass dies die Herstellung erschwert. Zwar ist der Kragen auf diese Weise ein verlorenes Teil, was jedoch wegen der sonstigen Vorteile ohne weiteres in Kauf genommen werden kann.

Im Anspruch 6 wird alternativ dazu vorgeschlagen, dass der Kragen aus dem gleichen Material wie die Gussform oder einem anderen Material bestehen kann und auf bzw. in die Gussform dichtend auf- bzw. eingesetzt ist. Je nach Art der Gussform kann der Kragen beispielsweise aus einem in die Eingussöffnung eingesetzten Keramikrohrstück oder dergleichen bestehen. Eine solche Ausführung ist ebenfalls verhältnismässig kostengünstig, wobei unter Umständen das als Kragen dienende Rohrstück sogar wiederverwendbar ist. Ein solcher Kragen könnte sich auch bei Verwendung von ansonsten metallischen Gussformen anbieten.

In Anspruch 7 wird in weiterer Ausgestaltung der Erfindung vorgeschlagen, dass der Kragen den inneren Rand einer zur Aufnahme des Aufsatzes mit Induktionsspulen geeigneten Nut bildet, wobei die Nut in die Oberseite der Gussform eingeformt ist. Bei der beispielsweise bei Sandgussformen üblichen Dicke der Oberseite ist es in vielen Fällen möglich, eine Nut in der Oberseite der Gussform zur Aufnahme der Induktionsspulen vorzusehen. Im allgemeinen wird eine solche Nut ringförmig und konzentrisch zur Eingussöffnung sein, es sind jedoch auch andere Formen möglich.

In spezieller Ausgestaltung der Erfindung wird in Anspruch 8 vorgeschlagen, dass die Querschnitte von Kragen und/oder Nut ungefähr rechteckig sind. Diese geometrisch einfache Form bietet sich zunächst an.

Wie in Anspruch 9 vorgeschlagen, können die Querschnitte von Kragen und/oder Nut je nach den Anforderungen an Statik und Handhabbarkeit des Aufsatzes auch anders geformt sein, z.B. abgerundet oder konisch. Insbesondere eine sich konisch nach oben erweiternde Nut kann für das Einsetzen der Induktionsspulen von Vorteil sein, wobei gleichzeitig die Statik des Kragens verbessert wird.

Ein Ausführungsbeispiel der Erfindung ist mit seinen erfindungswesentlichen Teilen schematisch in der Zeichnung dargestellt.

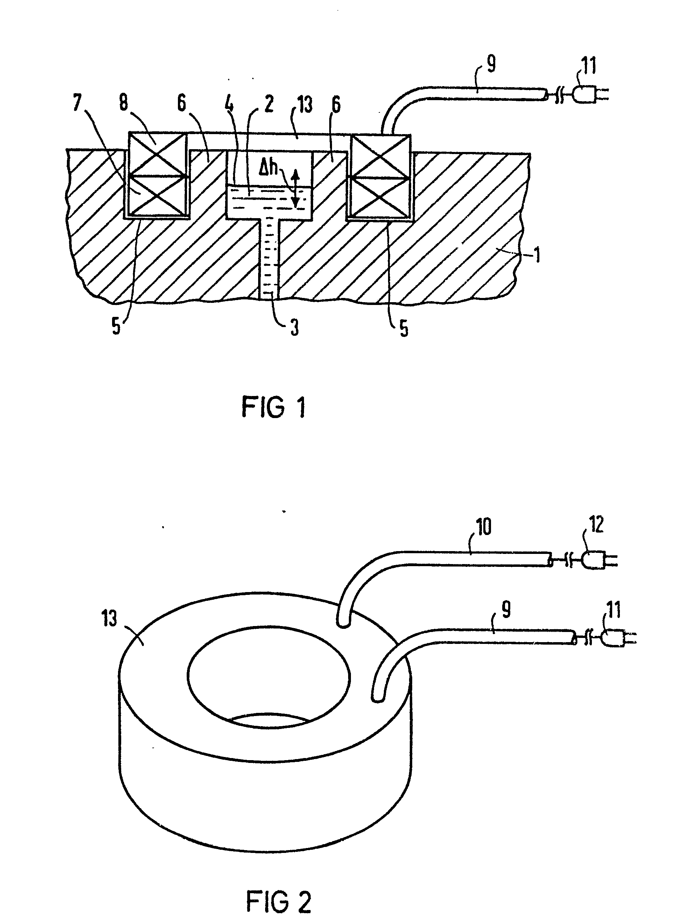

Dabei zeigt Figur 1 einen Ausschnitt aus einem Querschnitt durch eine Gussform, und zwar dem Bereich um die Eingussöffnung und

Figur 2 einen Messaufsatz, passend zu der Gussform in Figur 1.

In Figur 1 ist nur der durch die Erfindung veränderte Teil einer Gussform 1 dargestellt. Die erfindungsgemässe Veränderung kann bei praktisch jeder Gussform im Bereich der Einfüllöffnung vorgenommen werden. Die sonstige Ausgestaltung und Grösse der Gussform spielt solange keine Rolle, wie die ansonsten geforderten Mindestwandstärken trotz der erfindungsgemässen Ausgestaltung eingehalten werden können. Üblicherweise ist jede Gussform 1 mit einer Einfüllöffnung 3 versehen, welche im oberen Bereich 2 erweitert ist. Beim Füllen der Gussform 1 mit flüssigem Metall wird dieses in den erweiterten Bereich 2 der Eingussöffnung 3 gegossen. Während des gesamten Giessvorganges soll der Flüssigmetallspiegel 4 in dem erweiterten Teil 2 der Eingussöffnung möglichst konstant gehalten werden oder jedenfalls nur um einen kleinen Bereich $\triangle h$ schwanken. Nur so können Blasen in dem Gussstück bzw. ein Überfliessen von Flüssigmetall verhindert werden. Gemäss der vorliegenden Erfindung ist um den erweiterten Bereich 2 der Eingussöffnung 3 in der Gussform 1 eine in sich geschlossene Nut 5, die sich zur Aufnahme eines Messspulenaufsatzes 13 eignet, vorgesehen. Im vorliegenden Fall handelt es sich um eine konzentrisch zur Eingussöffnung 2, 3 liegende ringförmige Nut von rechteckigem Querschnitt. Diese Nut 5 befindet sich in einem gewissen Abstand von der erweiterten Eingussöffnung 2, so dass sie durch stabile Stege 6 beim Einfüllvorgang von dem Flüssigmetall getrennt ist. In die Nut 5 kann ein Messaufsatz 13 mit einer Sende- 7 und einer Empfangsspule 8 von oben eingesetzt werden. Dabei soll die Nut 5 vorzugsweise so tief sein, dass die Grenze zwischen Sende- 7 und Empfangsspule 8 ungefähr in dem Bereich liegt, in dem der Flüssigkmetallspiegel 4 beim Giessvorgang gehalten werden soll. Die Spulen 7, 8 bestehen vorzugsweise aus für hohe Temperaturen geeigneten Leitern, wobei sie zusätzlich in ein keramisches Material eingegossen sein können. Der Messaufsatz 13 kann mit Hilfe von geeigneten Halterungen 9, 10 gehandhabt und umgesetzt werden, wobei diese Halterungen vorzugsweise aus Stahlrohren bestehen, in deren Inneren die elektrischen Zuleitungen zu den Spulen verlegt sein können.

Figur 2 zeigt in perspektivischer Darstellung nochmals den Messaufsatz 13 mit seinen Halterungen 9, 10. Wie schematisch angedeutet können die Zuleitungen zu den Spulen im Inneren der Halterungen verlegt sein, wobei diese Zuleitungen dann mittels geeigneter Verbindungsstücke 11, 12 mit der Elektronik verbunden werden können.

Die vorliegende Erfindung eignet sich besonders für die Verwendung bei nicht elektrisch leitenden Gussformen und ermöglicht eine einfache und präzise automatische Regelung des Giessvorganges.

**Patentansprüche**

1. Vorrichtung zur Regelung einer Giess- bzw. Fördereinrichtung beim Füllen einer Gussform (1) mit Flüssigmetall, wobei die Höhe des Flüssigmetallspiegels (4) im oberen Bereich (2) der Eingussöffnung (3) der Gussform (1) mittels Induktionsspulen (7, 8) gemessen wird, bestehend aus einem Aufsatz (13) mit mindestens zwei Induktionsspulen (7, 8), von denen mindestens eine als Sende- (7) und mindestens eine als Empfangsspule (8) ausgebildet ist, und einer Elektronik, die die gegenseitige Induktion der Spulen misst und dementsprechend die Zufuhr von Flüssigmetall regelt, gekennzeichnet durch folgende Merkmale:

a) die Gussform (1) weist einen um den oberen Bereich (2) der Eingussöffnung (3) umlaufenden Kragen (6) auf,

b) der Aufsatz (13) ist so geformt, dass er um den Kragen (6) der Gussform (1) gelegt werden kann.

2. Vorrichtung nach Anspruch 1, dadurch gekennzeichnet, dass der Aufsatz (13) zwei übereinanderliegende Spulen (7, 8) mit etwa rechteckigem Querschnitt aus hochtemperaturbeständigen Wicklungen aufweist, wobei die Spulen (7, 8) in Keramikmasse oder dergleichen eingebettet sein können.

3. Vorrichtung nach Anspruch 1 oder 2, dadurch gekennzeichnet, dass die Zuleitungen (9, 10) zu den Induktionsspulen (7, 8) des Aufsatzes (13) in Halterungen verlegt sind, die ein Umsetzen von einer Gussform (1) zur nächsten ermöglichen.

4. Vorrichtung nach Anspruch 1, 2 oder 3, dadurch gekennzeichnet, dass der Kragen (6) ungefähr gleich hoch ist wie der Aufsatz (13) mit Induktionsspulen (7, 8), mindestens jedoch halb so hoch.

5. Vorrichtung nach Anspruch 4, dadurch gekennzeichnet, dass der Kragen (6) aus dem gleichen Material besteht wie die Gussform (1) und an diese angeformt ist.

6. Vorrichtung nach Anspruch 4, dadurch gekennzeichnet, dass der Kragen (6) aus dem gleichen Material wie die Gussform (1) oder einem anderen Material besteht und auf bzw. in die Gussform (1) dichtend auf- bzw. eingesetzt ist.

7. Vorrichtung nach einem der Ansprüche 4 bis 6, dadurch gekennzeichnet, dass der Kragen (6) den inneren Rand einer zur Aufnahme des Aufsatzes (13) mit Induktionsspulen (7, 8) geeigneten Nut (5) bildet, wobei die Nut (5) in die Oberseite der Gussform (1) eingeformt ist.

8. Vorrichtung nach einem der Ansprüche 4 bis 7, dadurch gekennzeichnet, dass die Querschnitte von Kragen (6) und/oder Nut (5) ungefähr rechteckig sind.

9. Vorrichtung nach einem der Ansprüche 4 bis 7, dadurch gekennzeichnet, dass die Querschnitte von Kragen (6) und/oder Nut (5) den Anforderungen an Statik und Handhabbarkeit des Aufsatzes (13) entsprechend geformt sind, z.B. abgerundet oder konisch.

**Revendications**

1. Dispositif de régulation d'une installation de coulée ou de refoulement pour le remplissage d'un moule de coulée (1) de métal liquide, dans lequel on mesure la hauteur du niveau du métal liquide (4) à la partie supérieure (2) de l'orifice de coulée (3) du moule de coulée (1) au moyen de bobines d'induction (7, 8), constitué d'une coiffe (13) ayant au moins deux bobines d'induction (7, 8) dont l'une au moins est constituée en bobine d'émission (7) et l'une au moins en bobine de réception (8) et une électronique qui mesure l'induction mutuelle des bobines et règle d'une manière correspondante l'afflux en métal liquide, remarquable par les caractéristiques suivantes:

a) Le moule de coulée (1) comporte un collet (6) entourant la partie supérieure (2) de l'orifice de coulée (3).

b) La coiffe (13) est conformée de manière à pouvoir être posée autour du collet (6) du moule de coulée (1).

2. Dispositif suivant la revendication 1, caractérisé en ce que la coiffe (13) comporte deux bobines (7, 8) superposées, de section transversale sensiblement rectangulaire et constituées d'enroulements résistant à une température élevée, les bobines (7, 8) pouvant être noyées dans une masse céramique ou un produit analogue.

3. Dispositif suivant la revendication 1 ou 2, caractérisé en ce que les conducteurs d'amenée du courant (9, 10) aux bobines d'induction (7, 8) de la coiffe (13) s'étendent dans des pièces de maintien qui permettent le passage d'un moule de coulée au suivant.

4. Dispositif suivant la revendication 1, 2 ou 3, caractérisé en ce que le collet (6) a à peu près la même hauteur que la coiffe (13) avec les bobines d'induction (7, 8) mais a cependant, au moins la moitié de sa hauteur.

5. Dispositif suivant la revendication 4, caractérisé en ce que le collet (6) est en le même matériau que le moule de coulée (1) et est d'une pièce avec celui-ci.

6. Dispositif suivant la revendication 4, caractérisé en ce que le collet (6) est en le même matériau que le moule de coulée (1) ou est en un matériau différent et est monté ou est introduit de manière étanche sur ou dans le moule de coulée (1).

7. Dispositif suivant l'une des revendications 4 à 6, caractérisé en ce que le collet (6) forme le bord intérieur d'une gorge (5) destinée à recevoir la coiffe (13) avec les bobines d'induction (7, 8), la gorge (5) étant ménagée dans le côté supérieur du moule de coulée (1).

8. Dispositif suivant l'une des revendications 4 à 7, caractérisé en ce que les sections transversales du collet (6) et/ou de la gorge (5) sont sensiblement rectangulaires.

9. Dispositif suivant l'une des revendications 4 à 7, caractérisé en ce que les sections transversales du collet (6) et/ou de la gorge (5) sont conformées, par exemple arrondies ou coniques, en fonction des exigences de stabilité et d'aptitude à la manipulation de la coiffe (13).

## Claims

1. Arrangement for regulating a casting or conveying device when filling a casting mould (1) with liquid metal, the height of the liquid metal level (4) being measured in the upper region (2) of the pouring-in opening (3) of the casting mould (1) by means of induction coils (7, 8), consisting of an attachment (13) with at least two induction coils (7, 8), of which at least one is formed as a transmitting coil (7) and at least one is formed as a receiving coil (8), and of an electronics system which measures the mutual induction of the coils and correspondingly regulates the supply of liquid metal, characterised by the following features:

a) The casting mould (1) has a collar (6) which runs round the upper region (2) of the pouring-in opening (3).

b) The attachment (13) is formed in such a way that it can be placed about the collar (6) of the casting mould (1).

2. Arrangement according to claim 1, characterised in that the attachment (13) has two superimposed coils (7, 8), with substantially rectangular cross section, consisting of high-temperature-resistant windings, it being possible to embed the coils (7, 8) in ceramic paste or the like.

3. Arrangement according to claim 1 or 2, characerised in that the supply lines (9, 10) to the induction coils (7, 8) of the attachment (13) are laid in holding supports which render possible transfer from one casting mould (1) to the next.

4. Arrangement according to claim 1, 2 or 3, characterised in that the collar (6) is substantially as high as the attachment (13) with induction coils (7, 8), at least, however, half as high.

5. Arrangement according to claim 4, characerised in that the collar (6) consists of the same material as the casting mould (1) and is preformed on the latter.

6. Arrangement according to claim 4, characerised in that the collar (6) consists of the same material as the casting mould (1) or of another material and is mounted onto or inserted into the casting mould (1) in a sealing manner.

7. Arrangement according to one of the claims 4 to 6, characterised in that the collar (6) forms the inner edge of a groove (5) suitable to receive the attachment (13) with induction coils (7, 8) the groove (5) being moulded into the upper side of the casting mould (1).

8. Arrangement according to one of the claims 4 to 7, characterised in that the cross sections of collar (6) and/or groove (5) are substantially rectangular.

9. Arrangement according to one of the claims 4 to 7, characterised in that the cross sections of collar (6) and/or groove (5) are formed in accordance with the requirements of statics and handling capability of the attachment (13), e.g. are rounded or conical.

**FIG 1**

**FIG 2**